# EUROPEAN PATENT APPLICATION

(11) **EP 4 299 431 A1**
(43) Date of publication of application: **03.01.2024**
(21) Application number: 22780603.1
(22) Date of filing: 25.03.2022
(51) Int. Cl.: B63B 25/08, B63B 15/00, B63H 21/12, F02D 19/02, F02M 37/00

(54) **VESSEL**

(30) Priority: 31.03.2021 JP 2021060286
(71) Applicant: Mitsubishi Shipbuilding Co., Ltd., Yokohama-shi Kanagawa 220-8401 (JP)
(72) Inventor: YAMADA, Daisuke, Yokohama-shi, Kanagawa 220-8401 (JP); OGATA, Toshio, Yokohama-shi, Kanagawa 220-8401 (JP); UNSEKI, Takashi, Yokohama-shi, Kanagawa 220-8401 (JP)
(74) Representative: Studio Torta S.p.A.
(86) International application number: PCT/JP2022/014538
(87) International publication number: WO 2022/210390

(57) **Abstract**

Provided is a vessel comprising: a vessel body; an ammonia presence part, which is provided to the vessel body and in which ammonia is present; a gas pressure-feeding unit, which is provided to the vessel body and which pressure-feeds a gas that is non-reactive with respect to the ammonia; a dehumidification unit that dehumidifies the gas being pressure-fed by the gas pressure-feeding unit; and a vent post that discharges the ammonia in the ammonia presence part, together with the gas that has passed through the dehumidification unit, to the atmosphere.

## Description

### Technical Field

The present disclosure relates to a vessel.

This application claims the priority of Japanese Patent Application No. 2021-060286 filed in Japan on March 31, 2021, the content of which is incorporated herein by reference.

### Background Art

A vessel for carrying ammonia which is a combustible gas as a fuel or a cargo is provided with a vent post for discharging the ammonia into the outboard atmosphere. For example, PTL 1 discloses a configuration in which the combustible gas remaining inside a pipe of a gas engine driven by the combustible gas is purged with an inert gas and discharged to the atmosphere via the vent post.

### Citation List

### Patent Literature

[PTL 1] Japanese Unexamined Patent Application Publication No. 2013-11332

### Summary of Invention

### Technical Problem

Incidentally, ammonia is more easily dissolved in moisture in air compared to other combustible gases. When an ammonia gas is dissolved in the moisture in the air, the ammonia gas turns into atomized ammonia water, and a specific gravity thereof becomes higher than that of the atmosphere. Therefore, in some cases, the atomized ammonia water is not smoothly discharged from an inside of the vent post. In addition, even when the atomized ammonia water can be discharged outward, there is a possibility that the atomized ammonia water may stay in the vicinity of the vent post and may not be sufficiently diffused.

The present disclosure is made to solve the above-described problems, and an object of the present disclosure is to provide a vessel which can prevent ammonia from being staying inside and in the vicinity of a vent post.

### Solution to Problem

In order to solve the above-described problems, a vessel according to the present disclosure includes a hull, an ammonia presence part provided in the hull and in which ammonia is present, a gas pumping unit provided in the hull to pump a gas which is not reactive with the ammonia, a dehumidification unit that dehumidifies the gas pumped by the gas pumping unit, and a vent post that discharges the ammonia in the ammonia presence part to an atmosphere, together with the gas passing through the dehumidification unit.

### Advantageous Effects of Invention

According to the present disclosure, it is possible to provide a vessel which can prevent ammonia from staying inside and in the vicinity of a vent post.

### Brief Description of Drawings

Fig. 1 is a side view of a vessel according to an embodiment of the present disclosure.
Fig. 2 is a view illustrating a piping system between a fuel tank and a main engine which are provided in the vessel according to the embodiment of the present disclosure.
Fig. 3 is a view illustrating a configuration of a vent post and a system for supplying a gas and ammonia to the vent post according to a first embodiment of the present disclosure.
Fig. 4 is a view illustrating a configuration of a vent post and a system for supplying a gas and ammonia to the vent post according to a second embodiment of the present disclosure.
Fig. 5 is a view illustrating a configuration of a vent post and a system for supplying a gas and ammonia to the vent post according to another embodiment of the present disclosure.

### Description of Embodiments

### [First Embodiment]

### (Vessel)

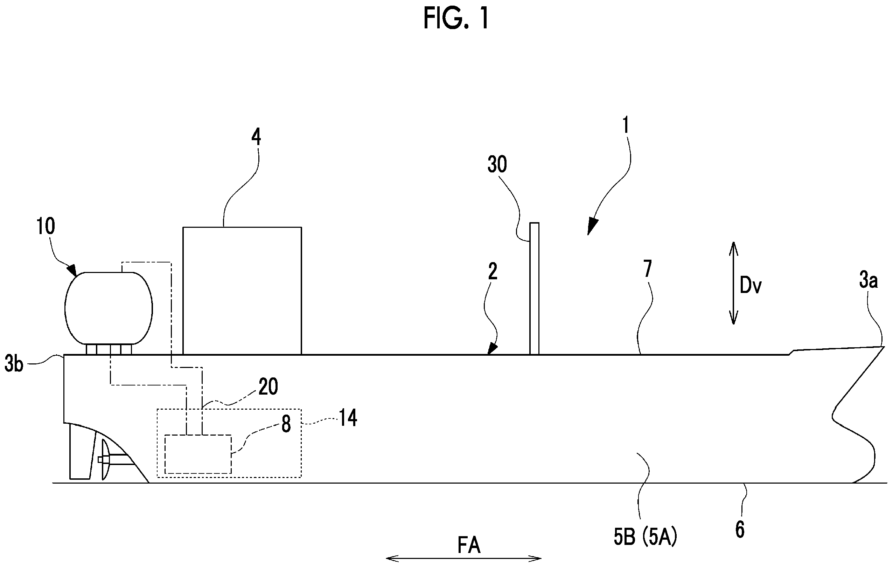

Hereinafter, a vessel according to an embodiment of the present disclosure will be described with reference to Figs. 1 to 3.

A vessel 1 of the present embodiment is a vessel that uses ammonia as a fuel, and includes a hull 2, a superstructure 4, an ammonia tank 11, a fuel tank 10, an engine room 14, a piping system 20, and a vent post 30, a gas pumping unit 70, a dehumidification unit 60, a jet flow line 27, and a jet flow generator 40. The vessel 1 in the present embodiment is a liquefied gas carrier.

### (Hull)

The hull 2 has broadsides 5A and 5B, a ship bottom 6, and an upper deck 7.

The broadsides 5A and 5B have a pair of broadside skins respectively forming the broadside 5A and the broadside 5B on the right and left. The ship bottom 6 has a double-bottomed ship bottom skin connecting the broadsides 5A and 5B. The upper deck 7 is provided over upper end portions of the pair of broadside skins in an upward-downward direction Dv.

The broadsides 5A and 5B, the ship bottom 6, and the upper deck 7 cause an outer shell of the hull 2 to have a box shape in a sectional view orthogonal to a bow-stern direction FA.

The bow-stern direction FA in the present embodiment is a direction extending from a stern 3b to a bow 3a in the hull 2. That is, the bow-stern direction FA is a navigation direction (traveling direction) of the vessel 1.

### (Superstructure)

The superstructure 4 is provided to face upward from the upper deck 7 in the upward-downward direction Dv.

### (Ammonia Tank)

The ammonia tank 11 is provided inside the hull 2. The ammonia tank 11 internally stores ammonia serving as a cargo. That is, the ammonia tank 11 is an ammonia presence part 15 in which the ammonia is present. For example, the ammonia tank 11 of the present embodiment is disposed closer to the bow 3a side in the bow-stern direction FA than the superstructure 4 (not illustrated). One end of a tank replacement line 12 (to be described later) and one end of a tank vent line 13 are connected to the ammonia tank 11.

### (Fuel Tank)

The fuel tank 10 internally stores the ammonia serving as a fuel for a main engine. For example, the fuel tank 10 of the present embodiment is provided on the upper deck 7 closer to the stern 3b side in the bow-stern direction FA than the superstructure 4.

### (Engine Room)

The engine room 14 is provided inside the hull 2 below the upper deck 7. The engine room 14 described as an example in the present embodiment is disposed below the superstructure 4. At least a main engine 8 is installed in the engine room 14. The main engine 8 is driven by a plurality of types of fuels including the ammonia. For example, the plurality of types of fuels including the ammonia can include a combination of the ammonia and heavy oil, and the vessel 1 of the present embodiment can switch between the ammonia and the heavy oil as the fuel of the main engine 8. Detailed description of a heavy oil tank for storing the heavy oil and a pipe for supplying the heavy oil from the heavy oil tank to the main engine 8 will be omitted.

### (Piping System)

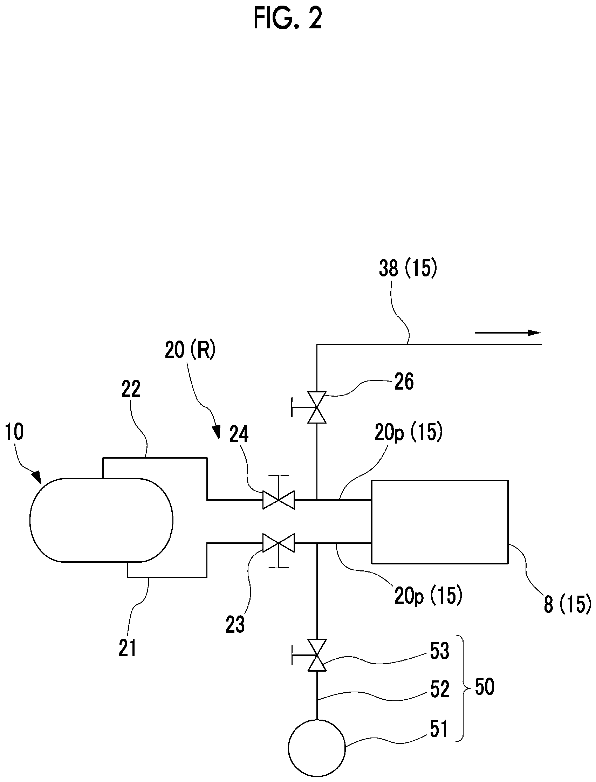

As illustrated in Figs. 1 and 2, a piping system 20 for mutually circulating the ammonia serving as a fuel is provided between the main engine 8 and the fuel tank 10. As illustrated in Fig. 2, the piping system 20 forms a circulation passage R through which the ammonia serving as the fuel is circulated between the fuel tank 10 and the main engine 8. The piping system 20 has a supplying pipe 21, a return pipe 22, on/off valves 23 and 24, a purge gas supplying device 50, and a main engine vent line 38.

Each of the supplying pipe 21 and the return pipe 22 connects the fuel tank 10 and the main engine 8. The supplying pipe 21 supplies the ammonia inside the fuel tank 10 to the main engine 8. The return pipe 22 returns excess ammonia which is not used as the fuel in the main engine 8 to the fuel tank 10. The on/off valve 23 is provided in the supplying pipe 21, and the on/off valve 24 is provided in the return pipe 22.

The on/off valves 23 and 24 are always in an open state while the main engine 8 is operated, and are in a closed state when the fuel used by the main engine 8 is switched, when there is an emergency stop, or when there is a long-term stop such as docking. Due to the on/off valve 23 and 24 in the closed state, the ammonia cannot be mutually circulated between the fuel tank 10 and the main engine 8 in each circulation passage R formed inside the supplying pipe 21 and the return pipe 22. In the present embodiment, a section including the main engine 8 between the on/off valve 23 of the supplying pipe 21 and the on/off valve 24 of the return pipe 22 in the piping system 20 will be referred to as a "purge target region 20p".

The purge gas supplying device 50 supplies a purge gas (inert gas) for purging, which is not reactive with the ammonia such as nitrogen, to the purge target region 20p. The purge gas supplying device 50 has a purge gas supplying unit 51, a purge gas supplying line 52, and a purge gas supplying valve 53. The purge gas supplying unit 51 supplies the purge gas (inert gas) to the purge gas supplying line 52.

The purge gas supplying line 52 feeds the purge gas supplied from the purge gas supplying unit 51 to the purge target region 20p of the supplying pipe 21, and replaces an atmosphere inside the purge target region 20p with the purge gas.

The purge gas supplying valve 53 is provided in the purge gas supplying line 52. The purge gas supplying valve 53 is normally brought into the closed state, and shuts off supplying the purge gas from the purge gas supplying unit 51 to the purge target region 20p of the piping system 20. In this state, the on/off valves 23 and 24 are brought into the open state, thereby bringing the ammonia into a state where the ammonia can be supplied from the fuel tank 10 to the main engine 8 through the supplying pipe 21, and causing excess ammonia to return to the fuel tank 10 from the main engine 8.

The purge gas supplying valve 53 is brought into the open state from the closed state when the fuel of the main engine 8 is switched from the ammonia to the heavy oil, when there is an emergency stop, or when there is a long-term stop. That is, when the on/off valve 23 is brought into the closed state, the ammonia inside the supplying pipe 21 cannot be mutually circulated between the fuel tank 10 and the main engine 8. Therefore, supplying the ammonia from the fuel tank 10 to the main engine 8 is stopped. The on/off valve 24 is brought into the closed state in accordance with a control sequence of the main engine 8, and returning the excess ammonia from the main engine 8 to the fuel tank 10 is stopped.

In this state, the purge gas supplying unit 51 is operated, the purge gas is supplied to the purge target region 20p of the piping system 20 via the purge gas supplying line 52, and the ammonia inside the purge target region 20p is replaced with the purge gas.

When the purge gas supplying device 50 is operated, the main engine vent line 38 supplies the ammonia purged in the purge target region 20p to the vent post 30. One end of the main engine vent line 38 is connected to the vent post 30, and the other end is connected to the purge target region 20p of the return pipe 22. A purge on/off valve 26 is provided in the main engine vent line 38. The purge on/off valve 26 is normally brought into the closed state.

Due to the purge on/off valve 26 in the closed state, the ammonia cannot be mutually circulated between the piping system 20 and the vent post 30 in a flow path inside the main engine vent line 38. The purge on/off valve 26 is brought into the open state from the closed state when the fuel of the main engine 8 is switched from the ammonia to the heavy oil, or when there is an emergency stop.

When the purge on/off valve 26 is brought into the open state, the ammonia in the purge target region 20p of the piping system 20 is directly introduced into a lower portion of the vent post 30 through the main engine vent line 38 and a suction portion 32 formed in the vent post 30.

In this way, the ammonia is introduced into the lower portion of the vent post 30 from the purge target region 20p of the piping system 20 via the main engine vent line 38. The vent post 30 discharges the ammonia introduced from the lower portion to the atmosphere through an upper end opening.

### (Vent Post)

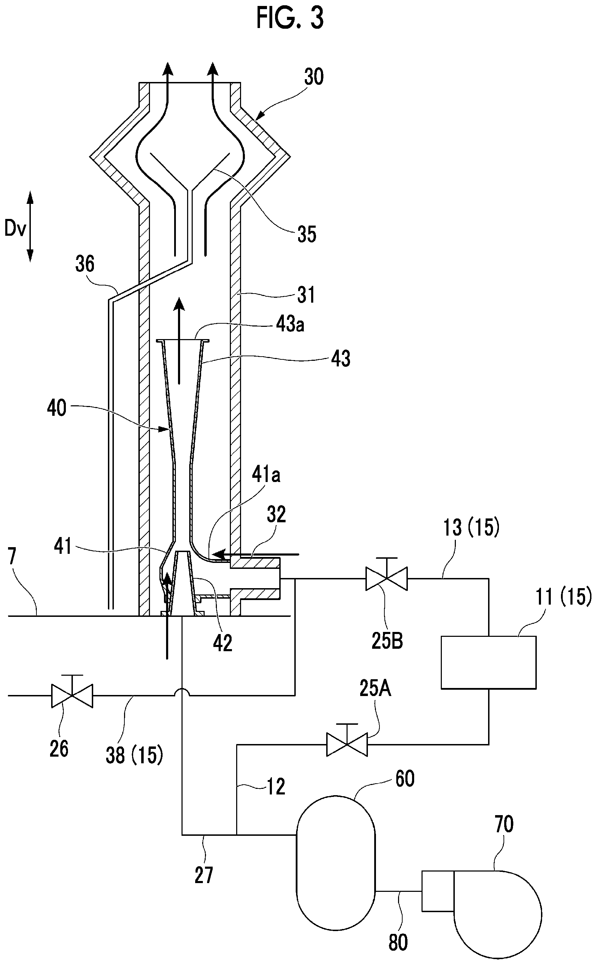

Next, the vent post 30 of the present embodiment will be described with reference to Fig. 3.

Fig. 3 is a view illustrating a configuration of the vent post 30 and a system for supplying a gas and the ammonia to the vent post 30.

The vent post 30 is provided to extend upward from the upper deck 7 in the upward-downward direction Dv. The vent post 30 has a vent post main body 31, a rain receiver 35, and a drain pipe 36.

The vent post main body 31 extends upward from the upper deck 7 in the upward-downward direction Dv. The vent post main body 31 has a tubular shape. An upper end of the vent post main body 31 has an opening which is open upward to the atmosphere in the upward-downward direction Dv. A lower side surface of the vent post main body 31 has a suction portion 32 for causing the ammonia in the purge target region 20p to flow into the vent post main body 31. The suction portion 32 in the present embodiment extends in a direction orthogonal to an extending direction of the vent post main body 31.

The rain receiver 35 is provided in the vicinity of an opening inside the vent post main body 31, and receives rainwater entering the inside of the vent post main body 31 from the opening in rainy weather or stormy weather. The rain receiver 35 of the present embodiment has a funnel shape in which a diameter dimension is narrowed downward in the upward-downward direction Dv. The drain pipe 36 is connected to the rain receiver 35. The drain pipe 36 discharges the rainwater received by the rain receiver 35 outward of the vent post main body 31. The drain pipe 36 discharges the rainwater outward of the vent post main body 31 to prevent the ammonia from being dissolved in the rainwater inside the vent post main body 31 and staying as ammonia water.

### (Gas Pumping Unit)

For example, the gas pumping unit 70 is provided inside the hull 2. The gas pumping unit 70 pumps a gas which is not reactive with the ammonia to the dehumidification unit 60 via a pumping line 80 when the fuel of the main engine 8 is switched from the ammonia to the heavy oil, when there is an emergency stop, or when there is a long-term stop. As the gas in the present embodiment, a dry gas which is not reactive with the ammonia, such as dry air, a dry nitrogen gas, and a dry argon gas, is preferably used.

### (Dehumidification Unit)

For example, the dehumidification unit 60 is provided inside the hull 2. The dehumidification unit 60 dehumidifies the gas pumped by the gas pumping unit 70 via the pumping line 80. That is, the dehumidification unit 60 dries the gas pumped by the gas pumping unit 70. In the present embodiment, a dew point temperature (dew point) of the gas dehumidified by the dehumidification unit 60 is preferably -20°C or lower, and is more preferably approximately -40°C.

### (Jet Flow Line)

The jet flow line 27 introduces the gas dehumidified by the dehumidification unit 60 into the vent post 30 from below the vent post 30. The tank replacement line 12 is connected to the jet flow line 27. More specifically, one end of the tank replacement line 12 is connected to the ammonia tank 11, and the other end of the tank replacement line 12 is connected to the jet flow line 27. Therefore, a configuration is adopted as follows. The gas passing through the dehumidification unit 60 can be diverted from the jet flow line 27 to the tank replacement line 12, and the gas for replacing the atmosphere inside the ammonia tank 11 can be introduced.

The tank on/off valve 25A is provided in the tank replacement line 12, and the tank on/off valve 25A is normally in a closed state. For example, the tank on/off valve 25A is brought into an open state during tank maintenance of the vessel 1. In this manner, a portion of the gas circulated inside the jet flow line 27 is diverted to the tank replacement line 12, and the diverted gas inside the tank replacement line 12 flows into the ammonia tank 11 as a gas for purging. When the gas flows into the ammonia tank 11, the ammonia inside the ammonia tank 11 is purged, and the purged ammonia flows out from the ammonia tank 11 via the tank vent line 13.

The tank vent line 13 connects the ammonia tank 11 and the main engine vent line 38. A tank on/off valve 25B is provided in the tank vent line 13. The tank on/off valve 25B is brought into open and closed states which are the same as those of the tank on/off valve 25A provided in the tank replacement line 12. In this manner, when the tank on/off valve 25B is in the open state, the purged ammonia flows into the tank vent line 13 from the ammonia tank 11. The purged ammonia further flows into the main engine vent line 38, and flows into the vent post 30 from the suction portion 32 of the vent post 30.

### (Jet Flow Generator)

The jet flow generator 40 is disposed inside the vent post main body 31 to extend in the same direction as the extending direction (upward-downward direction Dv) of the vent post main body 31. The jet flow generator 40 uses the gas introduced from below inside the vent post main body 31 as a driving fluid, uses the ammonia introduced from the suction portion 32 as a suction fluid, and discharges the fluids into the vent post main body 31 as a jet flow.

The jet flow generator 40 has a body 41, a nozzle 42, and a diffuser 43. The body 41 is formed to cover at least an injection port of the nozzle 42 from the outside, and has an introduction port 41a for introducing the ammonia serving as the suction fluid into the body 41. The introduction port 41a extends in a tubular shape in a direction orthogonal to the upward-downward direction Dv. The introduction port 41a receives the ammonia purged from the fuel tank 10 and the ammonia tank 11 via the main engine vent line 38. That is, one end of the main engine vent line 38 is connected to the introduction port 41a. One end of the jet flow line 27 is connected to the nozzle 42. The diffuser 43 is formed to extend upward in the upward-downward direction Dv integrally with the body 41. The ammonia introduced from the introduction port 41a is introduced into the diffuser 43, and is mixed with the dehumidified gas flowing from the nozzle 42 inside the diffuser 43 and inside the vent post main body 31.

### (Operational Effect)

In the vessel 1 according to the first embodiment, the ammonia in the ammonia presence part 15 is purged by the gas, and the purged ammonia is introduced into the vent post 30. Then, the gas pumping unit 70 is configured to pump the gas into the vent post 30 via the dehumidification unit 60.

According to the above-described configuration, the dehumidified gas to be pumped and the ammonia are mixed inside the vent post 30. Therefore, it is possible to prevent the ammonia from coming into contact with moisture. Furthermore, a flow velocity of the ammonia discharged from the opening of the vent post 30 increases. Therefore, it is possible to prevent the ammonia to be dissolved in the moisture contained in the atmosphere around the opening of the vent post 30. Therefore, it is possible to prevent the ammonia from staying inside the vent post 30 and in the vicinity of the vent post 30. Accordingly, it is possible to prevent a crew member of the vessel 1 from coming into contact with the ammonia.

In addition, the dehumidified gas and the ammonia are mixed inside the vent post 30. In this manner, the ammonia is diluted, and thus, ammonia concentration can be reduced.

In addition, in the above-described configuration, a configuration is adopted as follows. The gas serving as the jet flow passing through the dehumidification unit 60 and the ammonia in the ammonia presence part 15 are respectively guided to the jet flow generator 40. In this manner, an ejector effect is achieved inside the jet flow generator 40, and the purged ammonia can be introduced into the jet flow generator 40. That is, the gas serving as the jet flow can be vigorously discharged outward of the vent post 30 together with the ammonia. Therefore, it is possible to further prevent the ammonia from staying inside and in the vicinity of the vent post 30. In addition, the jet flow generator 40 introduces the ammonia in the ammonia presence part 15. Therefore, it is not necessary to provide a pump or a fan for supplying the air to the vent post 30.

In addition, in the above-described configuration, the jet flow generator 40 is provided inside the vent post 30 on the upper deck 7.

In this manner, even when it is difficult to secure a space for installing the jet flow generator 40 in the hull 2, the jet flow generator 40 can be installed.

In addition, in the above-described configuration, the purge gas supplying unit 51 supplies the purge gas which is not reactive with the ammonia to the ammonia presence part 15 (purge target region 20p) in which the ammonia serving as the fuel for driving the main engine 8 is present. Then, a configuration is adopted as follows. Inside the vent post 30, the ammonia purged by the purge gas can be discharged into the atmosphere together with the gas passing through the dehumidification unit 60.

In this manner, for example, when the fuel of the vessel 1 is switched from the ammonia to the heavy oil, when there is an emergency stop in the vessel 1, or when there is a long-term stop in the vessel 1, the ammonia removed from the purge target region 20p by the purge gas supplied from the purge gas supplying unit 51 can be discharged to the atmosphere from the vent post 30 together with the dehumidified gas.

In addition, in the above-described configuration, a configuration is adopted as follows. The gas passing through the dehumidification unit 60 inside the jet flow line 27 is diverted to the tank replacement line 12, and the ammonia inside the ammonia tank 11 can be purged. Then, the ammonia purged inside the ammonia tank 11 can be introduced into the vent post 30 via the tank vent line 13 connected to the ammonia tank 11, and can be discharged to the atmosphere together with the gas passing through the dehumidification unit 60. In this manner, the ammonia removed from the ammonia tank 11 by the purge gas supplied from the purge gas supplying unit 51 can be discharged to the atmosphere from the vent post 30 together with the dehumidified gas.

### [Second Embodiment]

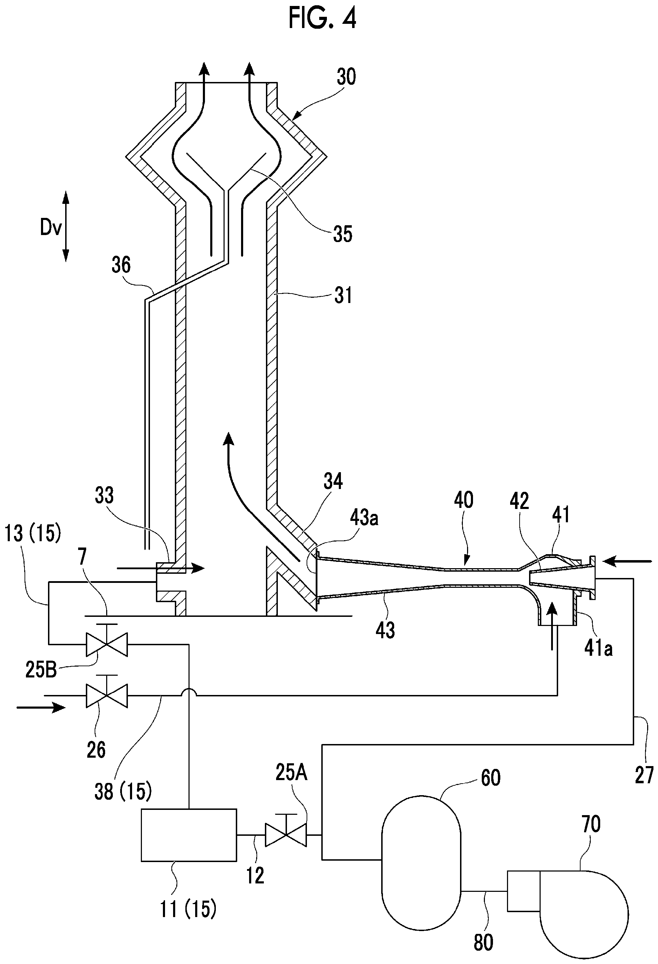

Hereinafter, a configuration of the vessel 1 of a second embodiment of the present disclosure will be described with reference to Fig. 4. The second embodiment has the same configuration as that of the first embodiment except for a configuration relating to connection of various lines for introducing the gas and the ammonia into the vent post 30 included in the vessel 1 and a disposition of the jet flow generator 40. The same reference numerals will be assigned to the same configuration elements as those in the first embodiment, and detailed description thereof will be omitted. Fig. 4 is a view illustrating a configuration of the vent post 30 and a system for supplying the gas and the ammonia to the vent post 30.

### (Vent Post)

A first suction portion 33 and a second suction portion 34 are formed on a lower side surface of the vent post main body 31. The first suction portion 33 extends in a direction orthogonal to the extending direction of the vent post main body 31. The ammonia tank 11 is connected to the first suction portion 33 via the tank vent line 13. The second suction portion 34 extends downward in the extending direction of the vent post main body 31 to be separated from a side surface of the vent post main body 31. The jet flow generator 40 is connected to the second suction portion 34.

### (Jet Flow Generator)

The jet flow generator 40 of the present embodiment is disposed outward of the vent post 30. The jet flow generator 40 of the present embodiment has the same configuration as that of the jet flow generator 40 of the first embodiment described above, and has the body 41, the nozzle 42, and the diffuser 43. The body 41 has the introduction port 41a that introduces the ammonia serving as the suction fluid into the body 41. One end of the main engine vent line 38 is connected to the introduction port 41a. One end of the jet flow line 27 is connected to the nozzle 42.

The diffuser 43 mixes the fluids introduced by the nozzle 42 and the introduction port 41a together, and discharges the mixed fluid from a diffuser outlet 43a. The diffuser outlet 43a of the present embodiment is directly connected to the second suction portion 34 of the vent post main body 31. The fluid discharged from the diffuser outlet 43a flows into the vent post main body 31 along the second suction portion 34, and becomes an upward jet flow inside the vent post main body 31.

### (Operational Effect)

In the vessel 1 according to the second embodiment, the jet flow generator 40 is provided outward of the vent post 30. In this manner, even when it is difficult to dispose the jet flow generator 40 inside the vent post 30, it is possible to install the jet flow generator 40 without greatly changing the configuration of the vent post 30. Then, while the ammonia can be prevented from being dissolved in the moisture, it is possible to prevent the ammonia from staying inside or in the vicinity of the vent post 30. Therefore, as in a case where the jet flow generator 40 is provided inside the vent post 30, it is possible to prevent a crew member who operates the vessel 1 from coming into contact with the ammonia in the vicinity of the vent post 30.

In addition, the dehumidified gas and the ammonia are mixed inside the vent post 30. In this manner, the ammonia is diluted, and thus, ammonia concentration can be reduced.

### [Other Embodiments]

Hitherto, the embodiments of the present disclosure have been described in detail with reference to the drawings. However, specific configurations are not limited to the configurations of each embodiment, and additions, omissions, and substitutions of configurations and other modifications can be made within the scope not departing from the concept of the present disclosure. In addition, the present disclosure is not limited by the embodiments, and is limited only by the claims.

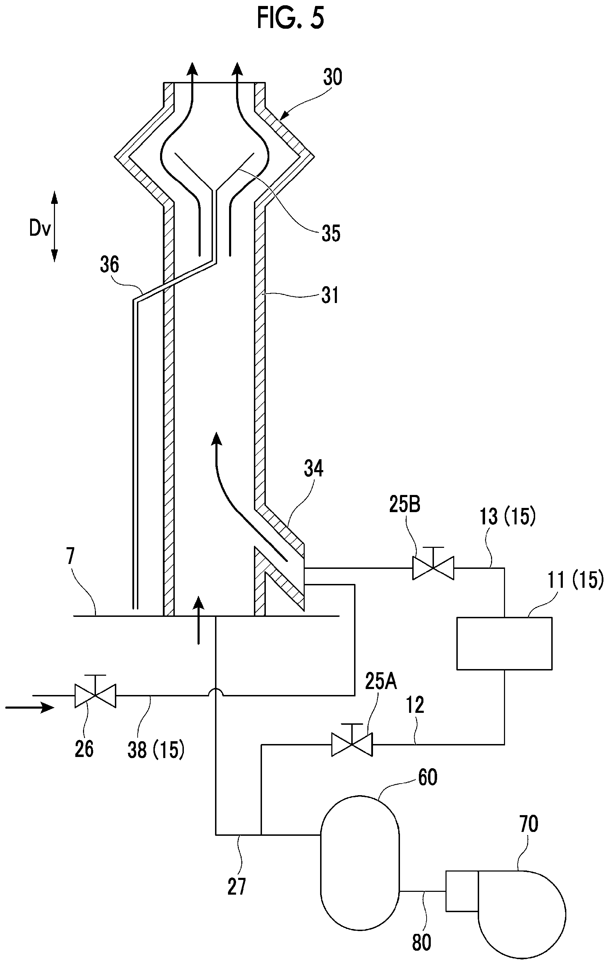

In the above-described embodiment, the vessel 1 includes the jet flow generator 40, but the configuration is not limited to the configuration including the jet flow generator 40. For example, as in another embodiment illustrated in Fig. 5, the jet flow generator 40 may be omitted. In another embodiment illustrated in Fig. 5, the gas dehumidified via the jet flow line 27 is pumped into the vent post 30 from below the vent post 30. Furthermore, in another embodiment illustrated in Fig. 5, the ammonia purged inside the purge target region 20p and the ammonia tank 11 is introduced via the main engine vent line 38 and the tank vent line 13 from the second suction portion 34 formed on a lower side surface of the vent post main body 31.

According to the configuration as in another embodiment illustrated in Fig. 5, the dehumidified gas pumped into the vent post 30 and the ammonia are mixed, and the flow velocity of the flow discharged from the opening of the vent post 30 increases. Therefore, while the ammonia discharged from the vent post 30 can be prevented from being dissolved in the moisture, it is possible to prevent the ammonia from staying inside and in the vicinity of the vent post 30. As a result, it is possible to prevent a crew member who operates the vessel 1 from coming into contact with the ammonia in the vicinity of the vent post 30.

In addition, the dehumidified gas and the ammonia are mixed inside the vent post 30. In this manner, the ammonia is diluted, and thus, ammonia concentration can be reduced.

In addition, in the above-described embodiment, the jet flow generator 40 has the diffuser 43, but the diffuser 43 may not be provided. A specific shape and a configuration of the jet flow generator 40 are not limited to those of each embodiment described above, and any configuration may be adopted as long as an ejector effect can be achieved at least inside the jet flow generator 40.

In addition, in the above-described embodiment, the main engine 8 has been described as an apparatus operated by the ammonia supplied from the fuel tank 10, but a usage of the main engine 8 is not limited in any way. In addition, the apparatus is not limited to the main engine 8, and may be a boiler or the like as long as the apparatus is an ammonia fuel apparatus driven by using the ammonia.

In addition, in the above-described first embodiment, a configuration in which the tank replacement line 12 is connected to the jet flow line 27 has been described. However, the present disclosure is not limited to this configuration. For example, the other end of the tank replacement line 12 may be connected to the pumping line 80 so that the gas pumped from the gas pumping unit 70 does not pass through the dehumidification unit 60. In this manner, the gas supplied to the ammonia tank 11 does not pass through the dehumidification unit 60. Therefore, dehumidification capacity of the dehumidification unit 60 can be reduced, compared to when the tank replacement line 12 is connected to the jet flow line 27.

In addition, in the above-described embodiment, a configuration is adopted in which the gas circulated through the jet flow line 27 is introduced into the vent post 30 via the dehumidification unit 60. However, the present disclosure is not limited to this configuration. Depending on a state of the atmosphere or the amount of the ammonia to be purged, the gas may be directly pumped to the vent post 30 from the gas pumping unit 70 without passing through the dehumidification unit 60.

In addition, in the above-described embodiment, a case where only one gas pumping unit 70 is provided has been described. However, the present disclosure is not limited to this configuration. For example, two gas pumping units 70 may be provided, the dehumidification unit 60 may be connected to one gas pumping unit 70 via the pumping line 80, and tank replacement line 12 may be connected to the other gas pumping unit 70. In this manner, as in a case where the other end of the tank replacement line 12 is connected to the pumping line 80, the gas supplied to the ammonia tank 11 does not pass through the dehumidification unit 60. Therefore, the dehumidification capacity of the dehumidification unit 60 can be reduced, compared to when the tank replacement line 12 is connected to the jet flow line 27. In addition, since a plurality of the gas pumping units 70 are provided, the ammonia inside the ammonia tank 11 can be purged at a higher pressure without using the gas pumping unit 70 having a large size, and the flow velocity of the flow generated inside the vent post 30 can be increased.

In addition, in the above-described embodiment, an example has been described in which the purge target region 20p of the piping system 20 is used as the ammonia presence part. However, the ammonia presence part is not limited to the purge target region 20p of the piping system 20. For example, a compartment in which an ammonia fuel apparatus is internally accommodated and there is a leakage possibility of the ammonia may be used as the ammonia presence part. In the ammonia presence part configured in this way, when the ammonia leaks from the ammonia fuel apparatus, the leaked and vaporized ammonia in the above-described compartment may be supplied to the vent post 30. For example, in order to supply the ammonia leaked in this way to the vent post 30, an ammonia discharge line (not illustrated) for connecting the vent post 30 and the compartment where there is a leakage possibility of the ammonia, and a blower fan (not illustrated) for supplying the ammonia to the vent post 30 from the compartment via the ammonia discharge line may be provided. In this manner, even when an emergency situation such as a leakage of the ammonia occurs in the compartment, the leaked ammonia can be supplied to the vent post 30, and it is possible to prevent the ammonia from staying inside the compartment in which the ammonia fuel apparatus is accommodated.

In addition, in the above-described embodiment, a configuration is adopted in which the ammonia in the purge target region 20p of the piping system 20 is directly introduced into the lower portion of the vent post 30 through the main engine vent line 38 and the suction portion 32. However, the present disclosure is not limited to this configuration. The vessel 1 may further include a danger removal device (not illustrated) provided in an intermediate portion of the main engine vent line 38 to remove a danger of the ammonia, and the ammonia in the purge target region 20p may be introduced to the lower portion of the vent post 30 after passing through the danger removal device.

In addition, the vessel 1 described in the above-described embodiment is not limited to each independent configuration, and the vessel 1 may be configured by appropriately combining the configuration elements described in each embodiment.

In addition, in the above-described embodiment, a vessel type of the vessel 1 is a liquefied gas carrier, but the vessel type is not limited to the liquefied gas carrier. The vessel type may be a container ship, a tanker, a bulk carrier, a car carrier, an RO-RO freight vessel, a cargo-passenger ship (ferry), a passenger ship, a fishing boat, a special vessel, a warship, or the like.

### [Additional Notes]

The vessel described in each of the embodiments is understood as follows, for example.

(1) According to a first aspect, there is provided the vessel 1 including the hull 2, the ammonia presence part 15 provided in the hull 2 and in which the ammonia is present, the gas pumping unit 70 provided in the hull 2 to pump the gas which is not reactive with the ammonia, the dehumidification unit 60 that dehumidifies the gas pumped by the gas pumping unit 70, and the vent post 30 that discharges the ammonia in the ammonia presence part 15 to the atmosphere, together with the gas passing through the dehumidification unit 60.

According to the above-described configuration, the dehumidified gas to be pumped and the ammonia are mixed inside the vent post 30. In this manner, it is possible to prevent the ammonia from coming into contact with the moisture. Furthermore, a flow velocity of the ammonia discharged from the opening of the vent post 30 increases. Therefore, it is possible to prevent the ammonia to be dissolved in the moisture contained in the atmosphere around the opening of the vent post 30. Therefore, it is possible to prevent the ammonia from staying inside the vent post 30 and in the vicinity of the vent post 30. In addition, the dehumidified gas and the ammonia are mixed inside the vent post 30. In this manner, the ammonia is diluted, and thus, ammonia concentration can be reduced.

(2) According to a second aspect of the vessel 1, the vessel 1 of (1) may further include the jet flow generator 40 that introduces the ammonia in the ammonia presence part 15 by using the gas passing through the dehumidification unit 60 as the driving fluid.

In this manner, an ejector effect is achieved inside the jet flow generator 40, and the purged ammonia can be introduced into the jet flow generator 40. Therefore, the gas serving as the jet flow can be vigorously discharged outward of the vent post 30 together with the ammonia while the ammonia is diluted. In addition, the jet flow generator 40 introduces the ammonia in the ammonia presence part 15. Therefore, it is not necessary to provide a pump or a fan for supplying the air to the vent post 30.

(3) According to a third aspect of the vessel 1, in the vessel 1 of (2), the jet flow generator 40 may be provided inside the vent post 30.

In this manner, even when it is difficult to secure a space for installing the jet flow generator 40 in the hull 2, the jet flow generator 40 can be installed.

(4) According to a fourth aspect of the vessel 1, in the vessel 1 of (2), the jet flow generator 40 may be provided outward of the vent post 30.

In this manner, even when it is difficult to dispose the jet flow generator 40 inside the vent post 30, it is possible to install the jet flow generator 40 without greatly changing the configuration of the vent post 30.

(5) According to a fifth aspect of the vessel 1, the vessel 1 according to any one of (1) to (4) may further include the main engine 8 driven by the plurality of types of fuels including the ammonia, and the purge gas supplying device 50 that supplies the purge gas which is not reactive with the ammonia to the ammonia presence part 15 in which the ammonia serving as the fuel for driving the main engine 8 is present. The vent post 30 may discharge at least the ammonia purged by the purge gas to the atmosphere, together with the gas passing through the dehumidification unit 60.

In this manner, for example, when the fuel of the vessel 1 is switched from the ammonia to the heavy oil, when there is an emergency stop in the vessel 1, or when there is a long-term stop in the vessel 1, while the ammonia is diluted, the ammonia purged from the purge target region 20p by the purge gas supplied from the purge gas supplying unit 51 can be discharged to the atmosphere from the vent post 30 together with the dehumidified gas.

(6) According to a sixth aspect of the vessel 1, the vessel 1 according to any one of (1) to (5) may further include the ammonia tank 11 serving as the ammonia presence part 15 for storing the ammonia, the tank replacement line 12 that supplies the gas dehumidified by the dehumidification unit 60 to the ammonia tank 11, and the tank vent line 13 that introduces the ammonia in the ammonia tank 11 into the vent post 30, when the gas is supplied from the tank replacement line 12 to replace the ammonia inside the ammonia tank 11 with the gas.

In this manner, the ammonia purged from the ammonia tank 11 by the purge gas supplied from the purge gas supplying unit 51 can be discharged to the atmosphere from the vent post 30 together with the dehumidified gas.

### Industrial Applicability

According to the vessel of the present disclosure, it is possible to prevent the ammonia from staying inside and in the vicinity of the vent post.

### Reference Signs List

1: Vessel
2: Hull
3a: Bow
3b: Stern
4: Superstructure
5A, 5B: Broadside
6: Ship bottom
7: Upper deck
8: Main engine
9: Bulkhead
10: Fuel tank
11: Ammonia tank
12: Tank replacement line
13: Tank vent line
14: Engine room
15: Ammonia presence part
16: Propeller
20: Piping system
20p: Purge target region
21: Supplying pipe
22: Return pipe
23, 24: On/off valve
25A, 25B: Tank on/off valve
26: Purge on/off valve
27: Jet flow line
30: Vent post
31: Vent post main body
32: Suction portion
33: First suction portion
34: Second suction portion
35: Rain receiver
36: Drain pipe
38: Main engine vent line
40: Jet flow generator
41: Body
41a: Introduction port
42: Nozzle
43: Diffuser
43a: Diffuser outlet
50: Purge gas supplying device
51: Purge gas supplying unit
52: Purge gas supplying line
53: Purge gas supplying valve
60: Dehumidification unit
70: Gas pumping unit
80: Pumping line
Dv: Upward-downward direction
FA: Bow-stern direction
R: Circulation passage

## Claims

1. A vessel comprising:
a hull;
an ammonia presence part provided in the hull and in which ammonia is present;
a gas pumping unit provided in the hull to pump a gas which is not reactive with the ammonia;
a dehumidification unit that dehumidifies the gas pumped by the gas pumping unit; and
a vent post that discharges the ammonia in the ammonia presence part to an atmosphere, together with the gas passing through the dehumidification unit.

2. The vessel according to Claim 1, further comprising:
a jet flow generator that introduces the ammonia in the ammonia presence part by using the gas passing through the dehumidification unit as a driving fluid.

3. The vessel according to Claim 2,
wherein the jet flow generator is provided inside the vent post.

4. The vessel according to Claim 2,
wherein the jet flow generator is provided outward of the vent post.

5. The vessel according to any one of Claims 1 to 4, further comprising:
a main engine driven by a plurality of types of fuels including the ammonia; and
a purge gas supplying device that supplies a purge gas which is not reactive with the ammonia to the ammonia presence part in which the ammonia serving as a fuel for driving the main engine is present,
wherein the vent post discharges at least the ammonia purged by the purge gas to the atmosphere, together with the gas passing through the dehumidification unit.

6. The vessel according to any one of Claims 1 to 5, further comprising:
an ammonia tank serving as the ammonia presence part for storing the ammonia;
a tank replacement line that supplies the gas dehumidified by the dehumidification unit to the ammonia tank; and
a tank vent line that introduces the ammonia in the ammonia tank into the vent post, when the gas is supplied from the tank replacement line to replace the ammonia inside the ammonia tank with the gas.
